(19) Europäisches Patentamt

European Patent Office

Office européen des brevets

(11) Publication number: **0 062 934**
**B1**

(12) **EUROPEAN PATENT SPECIFICATION**

(45) Date of publication of patent specification: **13.02.85**

(21) Application number: **82200292.9**

(22) Date of filing: **08.03.82**

(51) Int. Cl.⁴: **G 01 K 1/08, H 01 B 3/00**

(54) **Temperature sensing apparatus.**

(30) Priority: **12.03.81 NL 8101201**

(43) Date of publication of application:
**20.10.82 Bulletin 82/42**

(45) Publication of the grant of the patent:
**13.02.85 Bulletin 85/07**

(84) Designated Contracting States:
**DE FR GB IT NL SE**

(56) References cited:
**BE-A- 509 040**
**CA-A- 953 531**
**DE-A-2 546 102**
**FR-A-2 444 549**
**GB-A-1 124 228**
**GB-A-1 207 750**
**US-A-3 441 893**

(73) Proprietor: **N.V. Philips' Gloeilampenfabrieken**
**Groenewoudseweg 1**
**NL-5621 BA Eindhoven (NL)**

(72) Inventor: **Van Bokestal, André Marcel Alfred**
**c/o INT. OCTROOIBUREAU B.V. Prof. Holstlaan 6**
**NL-5656 AA Eindhoven (NL)**

(74) Representative: **Auwerda, Cornelis Petrus et al**
**INTERNATIONAAL OCTROOIBUREAU B.V. Prof.**
**Holstlaan 6**
**NL-5656 AA Eindhoven (NL)**

Courier Press, Leamington Spa, England.

**0062934**

### Description

The invention relates to a temperature sensing apparatus comprising a temperature sensing element, a casing therefor made of a first polymeric plastics material, a cable connected to said temperature sensing element, partially contained within said casing and having a sheath made of a second polymeric plastics material.

Temperature sensing apparatus of this type are, for example, suitable for use in arrangements which utilize an automatically operating temperature control. This includes cooling apparatus as well as heating arrangements.

For temperature sensing apparatus of this type a casing is often desirable to protect the element from moisture, corrosion and such like. Such a casing must, however, be adequately heat-conductive to enable a sufficiently rapid measurement of the temperature. Furthermore it is a requirement that it must be possible to manufacture such a casing rapidly and in a simple way and to connect it in a properly watertight manner to the sheath of the cable connecting the temperature sensing element to a control element.

Casings which satisfy the above-mentioned requirements, particularly casings which are properly moisture-tight at temperature up to approximately minus 30°C have so far been unknown.

The invention provides a casing which is properly moisture-tight up to a temperature of approximately minus 30°C. The casing according to the invention is therefore perfectly suitable for use as a casing for temperature sensing elements in refrigerators, freezers and such like.

According to the invention, the temperature sensing apparatus comprises a temperature sensing element, a casing therefor made of a first polymeric plastics material, a cable connected to said temperature sensing element and partially contained within said casing having a sheath made of a second polymeric plastics material, characterized in that the main constituent of the first plastics material and of the second plastics material are derived from the same monomer and the casing contains 50—80% by weight of a filler material chosen from magnesium oxide, silicon carbide, beryllium oxide and an aluminium oxide, calculated on the basis of the total quantity of plastics material plus filler material constituting said casing.

In addition to the above-mentioned constituents, the casing may contain still further conventional constituents such as plasticizers, stabilisers and catalysts.

If the cable sheath contains polyvinyl chloride as its main constituent, the casing of the temperature sensing element must also contain polyvinyl chloride as its main constituent. In that case, 50—80% by weight of magnesium oxide is preferably used as the filler material. It should be noted that main constituent must be understood to mean the polymeric plastics material present in the material of the casing in the largest quantity. In such sense a casing consisting of 60% by weight of magnesium oxide and 40% by weight of polyvinyl chloride contains polyvinyl chloride as the main constituent.

The casing of the temperature sensing element may be formed by, for example, casting or injection moulding.

The invention will now be described in detail by way of example with reference to a Figure.

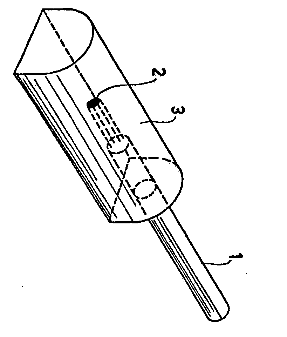

The Figure shows a temperature sensing apparatus. A suitable temperature sensing element (2) consists, for example, of a ceramic material having a negative temperature coefficient. Suitable materials are described in, for example, Philips Product Data Catalog "Non linear resistor" December 1970, page C5. *Via* a cable (1) the sensing element (2) is connected to a control element, not shown. The cable is provided with a sheath of a polymeric material, for example on the basis of polyvinyl chloride. The sensing element (2) is provided with a solid casing (3). This casing is moisture-tight by nature and is connected in a moisture-tight manner to the sheath of the cable.

By way of example there now follows some methods of producing the above-described casing.

Example 1:
A castable mixture having the following compositions was prepared:

2

|  | Parts by weight |
|---|---|
| 1. Polyvinyl chloride having a molecular weight of 87.000 | 50 |
| 2. Polyvinyl chloride having a molecular weight of 83.000 | 50 |
| 3. Dioctylphthalate | 78 |
| 4. Dibutyltindilaurate | 2 |
| 5. Epoxidized soybean oil | 2 |
| 6. Titanium dioxide | 2 |
| 7. Magnesium oxide | 432 |

A ceramic element having a negative temperature coefficient was placed in a mould. The element was connected with a cable by means of soldering. The cable sheath consisted of polyvinyl chloride. The above-defined mixture was poured in the mould and kept for 4 minutes at 150°C.

The combination obtained was removed from the mould. From tests it appeared that at a temperature from minus 30°C to plus 100°C the casing was moisture-tight to a sufficient extent and offers a good protection from corrosion.

The dioctylphthalate mentioned sub (3) may be replaced by dibutylphthalate or butylbenzylphthalate. Dibutyltindilaurate (4) may be replaced by dibutyltin or an alkyltin mercaptide; instead of epoxidized soybean oil (5) an alkyl or aryl phosphite may be used and calcium oxide or silicon oxide may be used instead of titanium dioxide (6).

Adding polyvinyl acetate to the above-mentioned mixture may still further improve the adhesion to the cable sheath.

Example 2:

By means of injection moulding (190°C, 88,26 MPa (pressure 900 kg/cm$^2$)) a temperature sensing element similar to that as described in Example 1 was provided with a casing consisting of:

|  | Parts by weight |
|---|---|
| 1. Polyvinyl chloride molecular weight 41.800 | 100 |
| 2. Dioctylphthalate | 75 |
| 3. Epoxidized soybean oil | 3 |
| 4. Barium/cadmium stabilizer | 1.5 |
| 5. Titanium dioxide (rutile) | 2 |
| 6. Magnesium oxide | 425 |

The bond between the cable sheath and the temperature sensing element may be further improved by first treating the cable with cyclohexanol or tetrahydrofurane.

This also resulted in a casing which is suitable for use at minus 30 to plus 100°C.

**Claims**

1. Temperature sensing apparatus comprising a temperature sensing element, a casing therefor made of a first polymeric plastics material, a cable connected to said temperature sensing element, partially contained within said casing and having a sheath made of a second polymeric plastics material, characterized in that the main constituent of the first plastics material and that of the second plastics material are derived from the same monomer and the casing (3) contains 50—80% by weight of a filler material chosen from magnesium oxide, silicon carbide, beryllium oxide and an aluminium oxide, calculated on the basis of the total quantity of plastics material plus filler material constituting said casing.

2. A temperature sensing apparatus as claimed in Claim 1, characterized in that the main constituent of the first and the second plastics materials consists of polyvinyl chloride and that the casing contains 50—80% by weight of magnesium oxide.

## Patentansprüche

1. Temperaturfühlapparat mit einem Temperaturfühlglied, einer Hülle dazu, die aus einem ersten polymeren Kunststoff hergestellt ist, einem Kabel, das mit dem genannten Temperaturfühlglied verbunden ist und teilweise innerhalb der genannten Hülle liegt, mit einem Mantel aus einem zweiten polymeren Kunststoff, dadurch gekennzeichnet, dass der Hauptbestandteil des ersten Kunststoffes und der des zweiten Kunststoffes von dem gleichen Monomer abgeleitet sind und dass die Hülle 50—80 Gew.-% Füllmittel enthält, das aus Magnesiumoxid, Siliziumkarbid, Berylliumoxid, und einem Aluminiumoxid gewählt ist, dies berechnet auf Basis der Gesamtmenge an Kunststoff und Füllmittel, das die genannte Hülle bildet.

2. Temperaturfühlapparat nach Anspruch 1, dadurch gekennzeichnet, dass der Hauptbestandteil des ersten und des zweiten Kunststoffes aus Polyvinylchlorid besteht und dass die Hülle 50—80 Gew.-% Magnesiumoxid enthält.

## Revendications

1. Appareil capteur de température comportant un élément capteur de température, une enveloppe réalisée pour ce dernier en une première matière synthétique polymère et un câble relié audit élément capteur de température se trouvant partiellement dans ladite enveloppe et présentant une gaine réalisée en une seonde matière synthétique polymère, caractérisé en ce que le composant principal de la première matière synthétique est dérivé d'un même monomère et l'enveloppe contient 50—80% en poids d'un matériau de remplissage choisi parmi l'oxyde de magnésium, le carbure de silicium, l'oxyde de beryllium et un oxyde d'aluminium, calculé à base de la quantité totale de matière synthétique augmentée du matériau de remplissage constituant ladite enveloppe.

2. Appareil capteur de température selon la revendication 1, caractérisé en ce que le composant principal des première et seconde matières synthétiques est constitué par du chlorure polyvinylique et que l'enveloppe contient 50 à 80% en poids d'oxyde de magnésium.

0 062 934